# EUROPEAN PATENT APPLICATION

(11) **EP 3 026 618 A1**
(43) Date of publication of application: **01.06.2016**
(21) Application number: 14306903.7
(22) Date of filing: 27.11.2014
(51) Int. Cl.: G06Q 10/10

(54) **Method and apparatus for controlling access to user profiles**

(71) Applicant: Thomson Licensing, 92130 Issy-les-Moulineaux (FR)
(72) Inventor: Legallais, Yvon, 35576 Cesson-Sévigné (FR); Howson, Christopher, 35576 Cesson-Sévigné (FR); Fontaine, Patrick, 35576 Cesson-Sévigné (FR)
(74) Representative: Perrot, Sébastien

(57) **Abstract**

A method performed by a user profiler server is disclosed. The method comprises receiving a first request from a first device to access a user profile of a second user; generating a first response according to rules specified by the second user; and sending the first response to the first device.

## Description

### Technical Field

The present disclosure generally relates to accessing a user profile by a third party, more particularly to defining rules by the owner of the user profile for granting/denying an access request from a third party.

### Background art

A user profile of a user may be automatically created by a central server outside of a user device associated with the user. The central server may monitor user activities, such as surfing the webs, and update the user profile accordingly. The user may be allowed to update the user profile as well. A user profile, which may include user preferences and user habits, is useful for a third party to offer product/content item recommendations to the user and may be useful for personalizing daily activity, such as watching a television at certain time on a particular channel. The centralized arrangement of user profiles facilitates accesses of user profiles from third parties, such as an on-line store. However, to protect privacy and provide security, a user, as the owner of the profile, should be able to control any access to his/her user profile stored in the central server.

The US Patent Application Publication No. 2008/0004848 A1 discloses that a user can specify a subset of data items in the user profile to be accessed by a particular entity. However, the control of the access disclosed in the US patent application publication is quite limited. Therefore, it would be desirable to have a system and method that offer different ways of controlling access to a user profile.

### Summary

In accordance with an aspect of the present principles, a method performed by a server is disclosed. The method comprises receiving a first request from a first device to access a user profile of a second user; generating a first response according to rules specified by the second user; and sending the first response to the first device.

The first request may be or may include a request to obtain an authorization indicator to access the user profile of the second user.

In one embodiment, the step of generating the first response comprises: checking if one of the rules is satisfied; if one of the rules is satisfied, including in the first response the authorization indicator.

In one embodiment, the user profile includes a plurality of data items, the first request indicates a first subset of data items in the user profile to be accessed, the rule satisfied indicates a second subset of data items in the user profile, and the first response includes a third set of data items which is accessible by the first device, wherein the third set includes data items appearing in both the first set and the second set.

In another embodiment, the method further comprises receiving a second request including a data item in the user profile of the second user to be accessed and a second indicator, which is the authorization indicator or derived from the authorization indicator; checking if the one of the rules satisfied is satisfied with respect to the second request and the data item in the second request is one of the data items in the third set; if the one of the rules satisfied is satisfied with respect to the second request and the data item in the second request is one of the data items in the third set, allowing access the data item specified in the second request; and if the one of the rules satisfied is not satisfied with respect to the second request or the data item in the second request is not one of the data items in the third set, denying access to the data item specified in the second request.

In another embodiment, the method further comprises assigning a first expiration time for the authorization indicator; and if the authorization indicator exceeds the first expiration time, sending a second response indicating that the second request is denied.

In another embodiment, one of the rules specifies applications allowed to access the user profile of the second user, if the identifier in the first request identifies one of the allowable applications, the first response includes the authorization indicator, and if the identifier identifies an application, which is not one of the allowable applications, the first response indicates that the request is denied. In another embodiment, one of the rules specifies a particular day or time of day that an application can access a particular data item in the user profile or a particular context of the second user or a particular context of a second device associated with the second user in which a particular data item in the user profile is accessible.

In another aspect of the present principles, a non-transitory program storage device readable by machine, tangibly embodying a program of instructions executable by the machine to perform program steps disclosed in this application.

In another aspect of the present principles, a server is disclosed. The server comprises memory means for storing a user profile of a second user; and processing means, characterized in that the processing means is configured to receive a first request from a first device to access the user profile of the second user; generate a first response according to rules specified by the second user; and send the first response to the first device. The first request may be or may include a request to obtain an authorization indicator to access the user profile of the second user.

In one embodiment, the processing means is configured to generate the first response by checking if one of the rules is satisfied and if one of the rules is satisfied, including in the first response the authorization indicator.

In another embodiment, the processing means is configured to receive a second request including a data item in the user profile of the second user to be accessed and a second indicator, which is the authorization indicator or derived from the authorization indicator; check if the one of the rules satisfied is satisfied with respect to the second request and the data item in the second request is one of the data items in the third set; if the one of the rules satisfied is satisfied with respect to the second request and the data item in the second request is one of the data items in the third set, allow access the data item specified in the second request; and if the one of the rules satisfied is not satisfied with respect to the second request or the data item in the second request is not one of the data items in the third set, deny access to the data item specified in the second request.

In another embodiment, one of the rules specifies applications allowed to access the user profile of the second user, if the identifier in the first request identifies one of the allowable applications, the first response includes the authorization indicator, and if the identifier identifies an application, which is not one of the allowable applications, the first response indicates that the request is denied.

In another embodiment, one of the rules specifies a particular day or time of day that an application can access a particular data item in the user profile or a particular context of the second user or a particular context of a second device associated with the second user in which a particular data item in the user profile is accessible.

The aforementioned brief summary of exemplary embodiments of the present principles is merely illustrative of the inventive concepts presented herein, and is not intended to limit the scope of the present principles in any manner.

### Description of the Drawings

These, and other aspects, features and advantages of the present disclosure will be described or become apparent from the following detailed description of the preferred embodiments, which is to be read in connection with the accompanying drawings.

In the drawings, wherein like reference numerals denote similar elements throughout the views:
FIG. 1 is a block diagram of an exemplary user profile system 10 in accordance with an embodiment of the present disclosure;
FIG. 2 is a block diagram of an exemplary profile server 20 shown in FIG. 1 in accordance with an embodiment of the present disclosure;
FIG. 3 is a block diagram of an exemplary user profile owner device 30 shown in FIG. 1 in accordance with an embodiment of the present disclosure;
FIG. 4 illustrates an exemplary process flow 400 executed by the user profile server 20 for processing a request from a first user to access data items in the user profile of a second user; and
FIG. 5 illustrates an exemplary process flow 500 executed by the owner user device 30 for processing a request to access the user profile of the owner stored in the user profiler server 20.

### Detailed Description

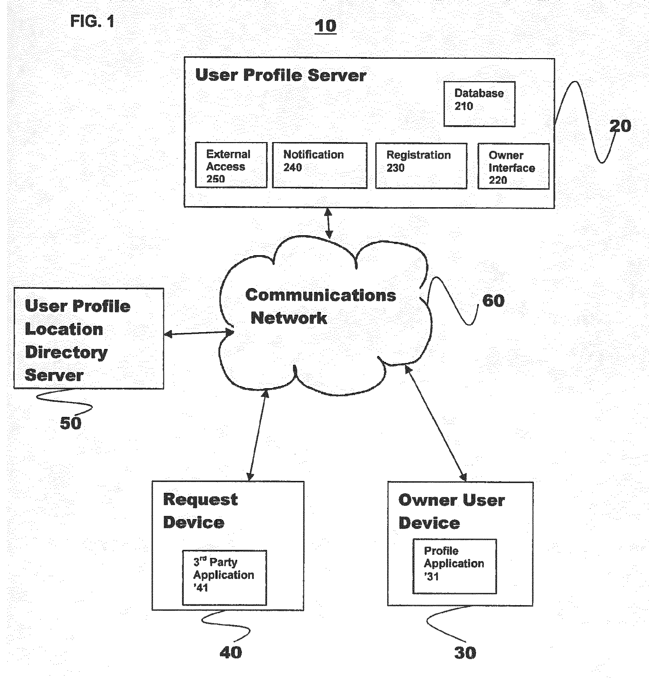

FIG. 1 is a block diagram generally illustrating one embodiment of a user profile system 10 according to the principles of the present disclosure. The user profile system 10 includes a user profile server 20, which is accessible by a particular application 31 of an owner user device 30 for uploading/modifying/updating a profile of the owner of the owner user device 30 stored in the user profile server 20 via a communications network 60. The particular application 31 is configured or operative to provide context of the owner user device 30, the context of the user of the owner device 30, the context of an application, and profile data of the owner, which is the user of the owner device 30, to the user profile server 20, and is configured or operative to allow/deny an access from a third party application 41 residing in a request device 40 representing a third party. The owner user device may be any device, such as a cell phone, a PC, a laptop, or a tablet. The request device 40 may be any device, such as an online store, a cell phone, a PC, a laptop, or a tablet. The third party application 41 consults with a user profile location directory 50, which has a known address, such as a uniform resource locator (URL), to obtain an address, such as a URL , of the user profile server 20.

Although only one request device 40 and only one owner user device 30 are shown, the user profile server 20 can support a plurality of the request devices representing different third parties and a plurality of the owner user devices representing different owners of different user profiles, and each request device may be able to access user profiles of different owners.

The context of the owner of the user profile as used herein is a set of parameters that characterizes the environment of the owner, which can be collected by a sensor (not shown) in the owner user device or other devices, or be inferred by intelligent agents. Some examples of the context of the owner are listed as follows:
- Location, which may be indicated by geographic latitude and longitude, or an indicator indicating that the owner is indoor/outdoor, at home, at work, in a room at the house of the owner, or other identifiers identifying the owner's location.
- Current activity, which can be indicated by an indicator indicating that the owner is walking, running, driving, cooking, watching television, using a particular device, etc.;
- Physical condition, which can be indicated by an indicator indicating the heart rate or the mood of the owner, or ambient temperature, etc.

An example of the context of the owner user device 30 is the battery condition of the owner user device 30, which is powered by a battery (not shown).

The user profile server 20 can be hosted by a central organization, commercial or not, which is capable of a large number of users. In another embodiment, the user profile server 20 is able to access a network storage device storing the user profile of that user, such as but not limited to a network-attached storage (NAS) device dedicated to a user and located at the user's home. In another embodiment, the user profile server 20 may include several servers with different URLs and the user profile location directory 50 is able to retrieve an URL of the servers according to, for example, an user identifier of the owner of a user profile and the identifier of the requesting entity.

The particular application 31 is a dedicated application in the owner user device 30 for the owner of the user profile stored in the server 20 to respond to an explicit request to access the user profile of the owner. When an explicit request to access to the user profile has been received, the particular application 31 may prompt the owner to respond to the request by either allowing or denying the request. In addition to controlling an access, the particular application 31 captures the user's context. The context may be inferred by using data captured by the owner user device or a sensor. The context may be inferred by user profile properties as well. The particular application 31 may use the user context to enrich the user profile and control the access to the user profile. An example of using the context to control the access is that a television set may access the user profile stored in the server 20 only if the user device 30 is at the proximity of this television set. The user device 30 is in the proximity of the television set, for example, when the user device 30 is connected to the same network, such as a local area network (LAN or a personal area network (PAN).

The communications network 60, as employed herein, is Internet-based according to one embodiment and may include local area networks, wide area networks and private networks (e. g. Intranets), but can comprise any suitable network or communications link that supports communications between different parties located at respective computers or other suitable electronic devices, as understood by those of skill in the art. For example, the communications network 60 may be, but not limited to, a telephone connection, satellite connection, cellular network, WI-FI Digital Subscriber Line (DSL), Internet communication, and the like. Although illustrated as a tablet, the owner user device 30 can comprise any type of Internet compliant communications device such as, but not limited to, a personal computer, a personal digital assistant, a smart phone, and/or an Internet compliant telephone.

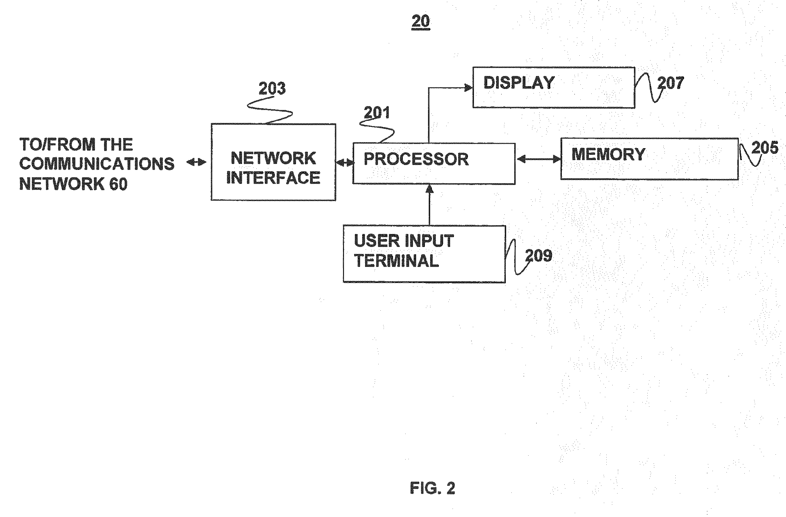

In the illustrative embodiment shown in FIG. 1, the user profile server 20 includes a database interface module 210, an owner interface module 220, the registration module 230, the notification module 240, and the external access module 250. FIG. 2 shows an illustrative embodiment of the user profile server 20. The user profile server 20 includes a processing means such as processor 201, memory means, such as memory 205, a user input terminal 209, and network interface 203. The memory 205 has a database for storing user profiles to be accessed by the database interface module 210. The memory 205 also stores software modules, such as, but not limited to, the database interface module 210, an owner interface module 220, the registration module 230, the notification module 240, and the external access module 250. Some of the foregoing elements of FIG. 2 may be embodied using integrated circuits (ICs), and some elements may for example be included on one or more ICs. For clarity of description, certain conventional elements associated with the electronic device 20 such as certain control signals, power signals and/or other elements may not be shown in FIG. 2.

The processor 201 may include one or more of processing units, such as microprocessors, digital signal processors, or combination thereof. The processor 201 is operative or configured to invoke the external access module 250 to provide user data access to the third party application 41 over the communication network 60. The external access module 250 exchanges data with the third party application 41 through a web interface (not shown) with well-defined rules, such as web Application Program Interface (API), which may specify one or more of the following:
- communication protocol
- authentication method
- parameters for data requests
- structure and format for return data

As an example of implementing the web API, the commonly used Representational State Transfer (REST), which is based on uniform resource identifier (URI), i.e., using Hypertext Transfer Protocol (HTTP)/ Hypertext Transfer Protocol Secure (HTTPS) operations, can be used. HTTP GET operation is used to retrieve resources, HTTP POST operation is used for creating resources, HTTP PUT operation is used for changing/replacing data, and HTTP DELETE is used for deleting resources.

The most common data formats, such as but not limited to Extensible Markup Language (XML) and JavaScript Object Notation (JSON) can be used.

The parameters of the request and structure of the return data are exemplarily defined by web API documentation. Depending on the type of commercial model, this documentation can be made available on an open or private manner.

If the external access module 250 is not co-located with the other elements of the user profile server 20, the external access module 250 should exchange data in a secure channel, for example, using the Secure Sockets Layer (SSL) and Transport Layer Security (TLS) protocols, which are widely used to provide secure channels for confidential Transmission Control Protocol (TCP)/Internet Protocol (IP) communication on the web.

The external access module 250 communicates with the owner interface module 220 to obtain the device context of the owner user device 30 and the user context of the owner of the user profile to be accessed, and configures the requested data for external access accordingly.

The notification module 240 is invoked by the processor 201 for publishing user data update to an application or service which has subscribed to notifications of a user profile or context update. This type of subscription is controlled by a communication between the registration module 230 and the third party application 41.

The notification module 240 maintains a list of the third parties to be notified with their associated requested information though their respective third party applications. On a user data update, the notification module 240 sends notifications to the subscribers accordingly. A log of those notifications is maintained by the notification module 240 to periodically inform the owner of the user profile of the log or provide a copy of the log to the owner responsive to an owner's request. Optionally, the owner may ask to be notified in real time of each notification sent to a third party.

The registration module 230 is invoked by the processor 201 to register a third party for accessing the user profile of the owner and is the first element to be contacted by a third party application dealing with the shared user profile of the data owner. The registration module 230 is a security element managing the subscription and policies to guaranty the respect of the data access rules as defined by the data owner. The registration module 230 receives the requests from a third party application 41 to access to the database on a request/response mode or in the form of notifications.

The owner interface module 220 is invoked by the processor 201 to communicate with the data owner through the profile application 31 in the owner user device 30 to do some or all of the following:
- requesting the owner for agreement to disclose the owner's personal data in the owner's user profile,
- informing the owner about an external access, and
- capturing the owner's context and/or the owner user device's context to update the database and the external access rights.

The database interface module 210 is invoked by the processor 201 to access a profile database (not shown), which contains user profiles. In a general approach, the profile database may be a collection of user profiles including personal contents which could be made available for other people or organization. In order to limit the exchanges with the owner user device 30, the processor 201 caches stable attributes of the owner's context.

A user profile includes personal data items such as but not limited to the following:
- access rules,
- name, date of birth, place of birth, gender,
- postal/shipping address, phone number, email address,
- education,
- car model,
- date of the last car breakdown,
- smart phone model,
- recently visited web sites,
- favorite content items, such as music genres, movie genres, artists, last purchased movie, television show, and music, clothing, consumer product, application for smart phones, tablets, personal computers, house, and book,
- the context of the owner, the context of the owner user device.

A favorite content item can be identified in the user profile, for example, by the title of the favorite content item. The user profile can be stored in a file or in several files. For example, the access rules can be stored in a different file, and the context of the owner, the context of the owner user device can be stored in yet another file.

The processor 201 is also operative or configured to execute software code including software code for implementing the principles of the present disclosure. For example, the processor 201 is operative or configured to respond to the request device 40 via the third party application 41 to access data items in the user profile of the owner using the owner user device 30, generating a response according to rules specified by the owner, and sending the response to the request device 40.

The processor 201 is also operative or configured to perform and/or enable other functions of the user profile server 20 including, but not limited to, detecting and responding to user inputs from the user input terminal 209 for operating and/or maintaining the user profile server 20, displaying user menus or instructions to the display device 207, detecting inputs to the user profile server 20, reading and writing data from and to the memory 205, and/or other functions.

The memory 205 is operative to perform data storage functions of the user profile server 20. According to an exemplary embodiment, the memory 205 stores data including, but not limited to, a user profile database, software code, notification logs, and/or other data. The memory 205 may include volatile and/or non-volatile memory regions and storage devices such hard disk drives, DVD drives. A part of memory is a non-transitory program storage device readable by the processor 201, tangibly embodying a program of instructions executable by the processor 201 to perform program steps as described herein according to the principles of the present disclosure.

The network interface 203 is operative or configured to perform network interfacing functions of the user profile server 20. According to an exemplary embodiment, the network interface 203 is operative or configured to receive signals such as requests from owner user devices to update the corresponding user profiles and contexts of the owners, requests from request devices for accessing a user profile, requests from owner devices for, for example, a list of the third parties allowed to access the owner's user profile, and to transmit responses to request devices under the control the processor 201. The network interface 203 may include wireless, such as WI_FI, and/or wired, such as Ethernet, interfaces.

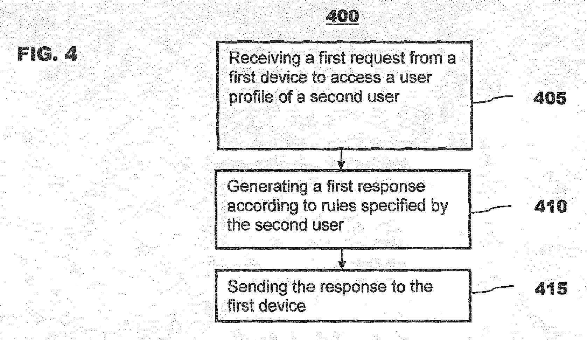

FIG. 4 illustrates an exemplary process 400 executed by the user profile server 20 for processing a request from a first user to access data items in the user profile of a second user. The first user, for example, is the user of the request device 40 and the second user (the owner) is the user of the owner user device 30 and the owner of the user profile to be accessed. At step 405, the processor 201 of the user profile server 20 is operative or configured to receive a first request from a first device to access a user profile of a second user. The first request may be or may include a request to obtain an authorization indicator to access the user profile of the second user. In this example, a first request is sent by the request device 40 via the third party application 41 and the communication network 60.

An authorization indicator can be an authorization code, such as an access token or an API key, as will be further explained later.

At step 410, the processor 201 is operative or configured to generate a first response according to rules specified by the owner of the owner user device 30, who is also the owner (the second user in the example) of the user profile.

In one embodiment, the processor 201 is operative or configured to check if one of the rules is satisfied and if one of the rules is satisfied, include in the first response the authorization indicator.

At step 415, the processor 201 is operative or configured to send the first response to the request device 40.

In one embodiment, prior to making the first request, the request device 40 sends a location request to the user location directory server 50 to obtain the location of the user profile server 20 having the user profile of the owner of the owner user device 30. The location request should include parameters such as an identifier identifying the identity of the requester, such as company name, the name of the third party application 41, and an identifier of the owner of the user profile to be accessed, such as the name of the owner, the name of the owner used in a social network, an email of the owner, and/or other information that identifies the owner. In response to the location request, the user profile location directory server 50 sends a response back to the request device 40 indicating an address, such as URL, of the user profile server 20. The response may also include information about the access rules/policy information of the user profile server 20, so that the request device 40 can register itself with the user profile server 20.

The request device 40 sends the first request (the registration request hereinafter) to access the user profile of the owner of the owner user device 30 to the user profile server 20 using the URL obtained from the user profile directory server 50.

In one embodiment, the registration (first) request includes one or more of the following parameters:
- an identifier of the owner of the user profile to be accessed, such as the name of the owner, the name of the owner used in a social network, an email of the owner, and/or other information that identifies the owner;
- an application descriptor, which includes an identifier of the third party application 41, the name of the editor of the third party application 41, the software licensing agreement (SLA) reference of the third party application 41, and/or the category of the third party application 41;
- data items in the user profile to be accessed and the access attributes, such as, read, write, or read/write permission; and
- the conditions on which those permissions are requested, examples of which are for unlimited period, for a specific period, on user context event, and/or with user notification at each access.

The identifier of the third party application identifies the third party application or service. The identifier of the third party application may be an explicit name or unique identifier delivered by an authority. For example, in the case of an Android application, it can be the package name. For a video on demand service (VoD), it can be identified as, for example, "Video On Demand."

The name of the editor identifies the entity that publishes the application or operates the services. For example, the name of the editor for a Netflix VoD service can be "Netflix."

If the access attribute for a data item is indicated as write or read/write, the third party application 41 is allowed to modify the owner's user profile, for example, adding more movie titles that the owner recently orders from a service provider.

The category of a third party application may include the following:

| | |
|---|---|
| Books and Reference | Book readers, reference books, text books, dictionaries, thesaurus, wikis |
| Business | Document editor/reader, package tracking, remote desktop, email management, job search |
| Comics | Comic players, comic titles |
| Communications | Messaging, chat/IM, dialers, address books, browsers, call management |
| Education | Exam preparations, study-aids, vocabulary, educational games, language learning |
| Entertainment | Streaming video, Movies, TV, interactive entertainment |
| Finance | Banking, payment, ATM finders, financial news, insurance, taxes, portfolio/trading, tip calculators |
| Health & Fitness | Personal fitness, workout tracking, diet and nutritional tips, health & safety etc. |
| Libraries & Demo | Software Libraries, technical demos |
| Lifestyle Live Wallpapers | Recipes, style guides |
| Media & Video | Subscription movie services, remote controls, media/video players |
| Medical | Drug & clinical references, calculators, handbooks for healthcare providers, medical journals & news |
| Music & Audio | Music services, radios, music players |
| News & Magazines | Newspapers, news aggregators, magazines, blogging |
| Personalization | Wallpapers, live wallpapers, home screen, lock screen, ringtones |
| Photography | Cameras, photo editing tools, photo management and sharing |
| Productivity | Notepad, to do list, keyboard, printing, calendar, backup, calculator, conversion |
| Shopping | Online shopping, auctions, coupons, price comparison, grocery lists, product reviews |
| Social | Social networking, check-in, blogging |
| Sports | Sports News & Commentary, score tracking, fantasy team management, game Coverage |
| Tools | Tools for Android devices |
| Transportation | Public transportation, navigation tools, driving |
| Travel & Local | Maps, City guides, local business information, trip management tools |
| Weather | Weather reports |
| Widgets | |

In one embodiment, when the third party application 41 has been updated, the authorization indicator granted by the user profile server 20 becomes invalid and the request device should send another registration request to the user profile directory server 20 to obtain another authorization indicator.

When the processor 201 of the user profile server 20 receives a registration request, the processor 201 checks the user profile of the owner user device 30 for access rules specified by the owner. The access rules may be defined by the owner using the owner user device 30 and sent to the user profile server 20 by the owner user device 30. The access rules define the criteria in which the processor 201 is operative or configured to generate the first response automatically. Some examples of the access rules specify conditions for allowing access to the user profile according to the attribute of an item in the user profile, names of access applications, date or time of day, the context of the owner device, and the context of the owner of the requested user profile, or any combination thereof. For example, a rule may specify applications allowed to access the user profile of the owner and if the identifier of the application in the registration request identifies one of the allowable applications, the first response includes the authorization indicator, and if the identifier identifies an application, which is not one of the allowable applications, the first response indicates that the registration request is denied.

For another example, a rule may specify time of day an application is allowed to access the user profile. As such, the processor 201 is operative or configured to check time of day of the first request, wherein if the time of day of the first request is within the time of day specified in the rules, the first response includes the authorization indicator, and if the time of day of the first request is not within the time of day specified in the rule, the first response indicates that the request is denied.

A rule may specify the access attribute, such as read, write, or both, of a particular data item. For example, a rule may specify that a particular application can read and write to a data item in the user profile. As such, the particular application is able to modify the data item or add a data item in the same category.

The context of the owner and the context of the owner user device 30 are sent to the user profile server 20 by the owner user device 30. The context of the owner may include the current location of the owner, for example, when the owner is at home, the current activity of the owner for example watching television, and physical condition such as the heart rate and the ambient temperature. When the owner is at home, the owner user device 30 detects the location of the owner user device 30 using, for example, the global positioning system (GPS) included in the owner user device 30. The owner user device 30 also has the information of the home address of the owner and can determine whether the owner is at home or not according to the location detected by the GPS. As indicated previously, the owner user device 30 reports the context of the owner to the user profile server 20 via the profile application 31 in the owner user device 30, the owner interface 220 in the user interface module 220 in the user profile server 20, and the communications network 60.

The owner may also indicate one or more particular items in the user profile that can be accessed. For example, the owner may indicate that when the owner is at home, a particular item is allowed to be accessed. For another example, the owner may specify in the user profile that the owner is looking for a townhouse in a particular city and specify what application, such as an application related to real estate services the housing preference and the email address in the user profile when the owner is in that city. The real estate serves can then provide available housing to the owner through, for example, an email. In addition to the location, the owner may also specify the valid time period, for example, from July to September, for allowing the access.

The owner may also indicate preferred clothing in the user profile and specify that in a particular day, for example, black Friday, or season, a third party retail service application is allowed to access the preferred clothing items in the user profile.

Another example of using owner's context as a criterion for allowing access to certain items in the user profile is that when the user is at home, a set-top box (STB) application is allowed to access the preferred program items in the user profile.

The owner may also allow/deny access according to the context of the owner user device 30 specified in the user profile, which is transmitted to the user profile server 20 via the profile application 31. For example, the owner may specify that when the battery charge level of the owner user device 30 is low, a specified third party application may access or update none or one or more items in the user profile. For another example, the rule can specify which third party application can access newly added items by user profile application 31 of the owner user device 30, thus allowing the third party application to collaborate with the update/enrichments to the user profile.

In one embodiment, if an item in the profile specified in the registration request is indicated as not accessible with a particular attribute, such as, read, write, or read/write, the processor 201 indicates in the response to the request device 40 that that access to that item with the requested attribute is denied.

If there is no access rule specified in the user profile or none of the owner specified rules is satisfied, the processor 201 forwards the registration request to the owner user device 30. The forwarding may be transmitted in the form of an email, SMS or any type of push messages. In one embodiment, the profile application 31 in the owner user device 30 receives the forwarded message including the description of the registration request. The owner may pre-define in the owner user device 30 rules or conditions that automatic authorization is allowed by the owner user device 30 without notifying the owner. The rules may be similar to those described above with respect to the rules defined in the user profile. Since the user profile server 20 forwards the registration request to the owner user device 30 if none of the owner specified rules stored in the user profile server 20 is satisfied, the rules stored in the owner user device 30 should be more than those stored in the user profile server 20 or one or more of them should be different from those stored in the server 20.

If the registration request does not fall into the automatic authorization conditions (none of the rules stored in the owner user device 30 is satisfied), the owner user device 30 is operative or configured to provide a user interface allowing the owner to define/modify the rules in the owner user device 30 or rules in the user profile, or simply to accept or deny the request.

In one embodiment, the registration request may specify particular items in the user profile to be accessed but the owner may authorize access to a subset of those items specified in the registration request. The particular items may include all the data items in the user profile or a subset of data items in the user profile. The owner may do so by specifying accessible items, which may be a subset of the data items in the user profile, in a rule stored in the owner user device 30 or the user profile server 20, or manually selecting those items through the user interface provided by the owner user device 30. The authorized data items are the intersection of the particular items and those items specified in a satisfied rule or manually entered by the owner. As such, the authorized data items appear in both the requested particular items and those specified in a satisfied rule. If the decision is made at the owner user device 30, the owner user device 30 will inform the user profile server 20 those authorized items and the user profile server 20 will include those authorized items in the first response to the request device 40. If the decision is made at the user profile server 20, the user profile server 20 includes the authorized items in the first response to the request device 40.

The partial or full authorization by the owner user device 30 is then sent back to the user profile server 20 from the profile application 31 in the owner user device 30. In response, the processor 201 is operative or configured, via for example, the registration module 230, to generate an authorization indicator, which is included in the first response sent back to the request device 40 by the processor 201.

The authorization indicator is used by the third party application 41 for use as a second indicator or to derive a second indicator to be included in a second request for accessing one or more authorized data items in the owner's user profile. More than one second request may be sent by the third party application 41 and each may request a different set of data items in the user profile.

In one embodiment, the authorization is managed by the processor 201 using the OAuth protocol. In this case, the user profile server 20 is the authorization sever, the third party application 41 in the request device 40 is the client application, and the authorization indicator is an authorization code. In this embodiment, the third party application 41 must send another request including the authorization indicator, which is an authorization code, to obtain the second indicator, which is an access token. In response to that request for the access token, the user profile server 20 may also send a refresh token to the request device 40. An access token has a longer lifetime than the corresponding authorization code, typically in the order of minutes and hours. When the access token expires, attempts to use it by the third party application 41 will fail and the third party application 41 must send a refresh token to obtain a new access token for further accesses. A refresh token may not even expire until it is revoked by the owner of the owner user device 30.

In another embodiment, an authorization indicator is used directly as an API key and used as the second indicator in the second request. As such, the API key is equivalent to the access token and the authorization code in the OAuth approach. In this embodiment, each third party application is associated with an API key. The processor 201 is operative and configured to store in the memory 205 a list of third party applications with their associated API keys for accessing the user profile of the owner of the owner user device 30. The owner of the user profile may request a copy of the list via the owner user device 30. The external access module 250 in the user profile server 20 is responsible for managing a third party access to the resources or data items in the user profile authorized by the owner of the user profile. Similar to an access token in the OAuth approach, an API key may be given an expiration time.

In one embodiment, when the processor 201 of the user profile server 20 receives the second request with the second indicator, the processor 201 is operative or configured to recheck whether the rule satisfied in the registration request is still satisfied with respect to the second request. If the rule satisfied is still satisfied with respect to the second request, the processor 201 is operative to allow access to the approved (authorized) items in the user profile and send a second response including the approved data items. Otherwise, the processor 201 is operative or configured to deny the request and the second response may indicate reasons why the second request is denied.

The reason for rechecking the rule is that the condition, such as day, time, the context of the owner or the owner user device 30, may change. For example, if the owner wants to keep secret about the owner's professional activities, the owner may specify a rule in the user profile and/or in the owner user device 30 that during work hours or when the owner is in a particular geographical area, the owner's location in the owner's user profile is not allowed to be accessed. If the second request indicates to access the location in the user profile and the owner is in that particular geographic area, the second request must be denied.

Rechecking the rule satisfied is also important because granularity of the information allowed to be provided may change according to the rule as well. For example, instead of giving the geographic coordinate of the current location of the owner when the owner is at home, the owner may only indicate that the owner is at home. Similarly, the context may change the read/write permission. In one context, a third party application may be allowed to read and write to certain items of the user profile. In another context, the third party application may be allowed to read those items only.

In another embodiment, the processor 201 is operative or configured to assign an expiration time to the authorization indicator and if the authorization indicator expires or exceeds the expiration time, the processor 201 is operative or configured to revoke the authorization indicator and deny the second request and indicate in the second response that the authorization indicator has been revoked. When the authorization indicator has been revoked, the third party application 41 may send another first (registration) request to get another authorization indicator.

In one embodiment, the processor 201 sends a list of third parties allowed to access the owner's user profile and/or a list of the third parties subscribing to receive notification of an update to the owner's user profile upon request by the owner user device 30, and the owner may select one or more of the third parties for revocation of the corresponding authorization indicators, second indicators, and/or the refresh token used in the OAuth approach. When the authorization indicator, such as the authorization code and the API key, and/or the second indicator such as the access token or the API key, or the refresh token associated with a third party are revoked or expire, the third party application used by that third party must handle the failure by submitting another registration request.

In one embodiment, a third party application, such as the third party application 41, may subscribe to the user profiler server 20 for notification of any update of the owner's user profile performed by the profile application 31 of the owner user device 30. The update may include updates to the address, email, phone number of the owner, preferred items, such as music genres, movies, artists, consumer products, and context, such as owner's context, which includes current location and activity, and device context, such as battery charge level. For an interest item, the owner may also specify a desired price. Such notifications have advantages such as informing a retail service provider that the owner is looking for a new consumer electronics, or informing a multimedia provider the desired price of a DVD, Blu-ray disc, or a video on demand (VoD) item with a particular price, so that the retail service or the multimedia provider may provide a better recommendation to the owner.

In one embodiment, the first and second responses indicating that the requests are denied include a reason of the rejection, such as requested user profile not existing, pending owner authorization, timeout for owner's acknowledgement, or refusal by the owner. When the registration request is forwarded to the owner, the owner must respond to the user profiler server 20 within a predefined time period.

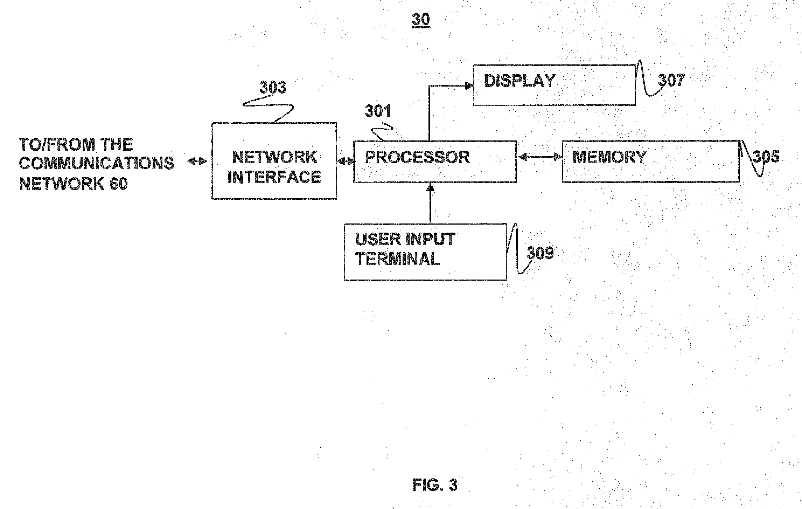

FIG. 3 is a block diagram of an exemplary owner user device 30. The owner user device 30 has a similar structure as the user profiler server 20 shown in FIG. 2. The owner user device 30 in FIG. 3 include a processor 301, a memory 305, a user input terminal 309, a display 307, and a network interface 303, which are respectively similar to the processor 201, the memory 205, the user input terminal 209, the display 207, and the network interface 203 shown in FIG. 2. The functions of each element of the owner user device 30 are similar to the corresponding element in the user profiler server 20 except that the functions are applied to the owner user device 30. For example, the processor 301 of the owner user device 30 is operative or configured to execute software code stored in the memory 305 of the owner user device 30, including software code for implementing the principles of the present disclosure. Since other elements are similar, they will not be further described for purpose of simplicity and clarity.

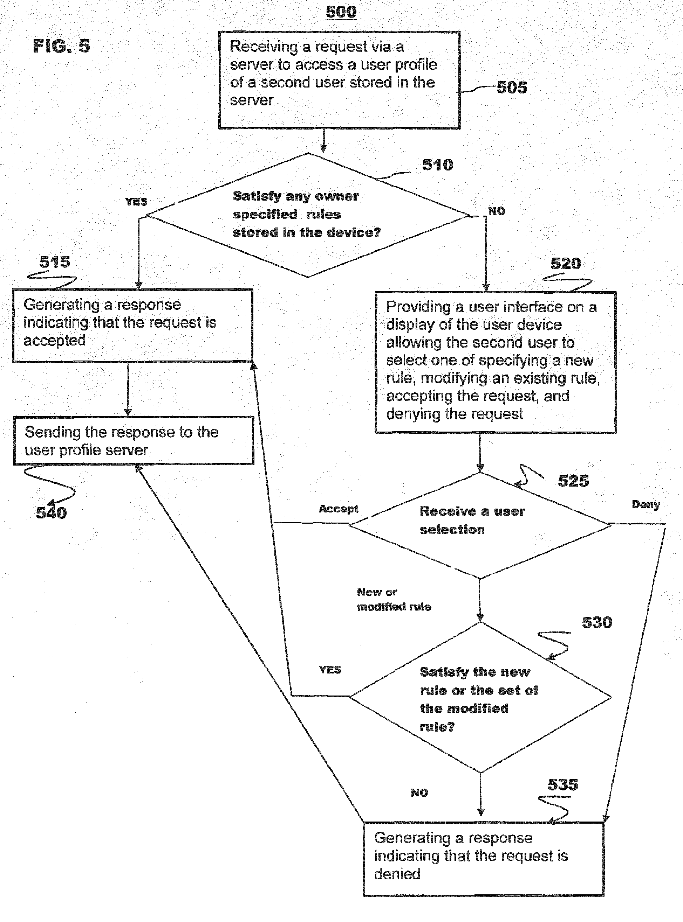

FIG. 5 illustrates an exemplary process 500 executed by the owner user device 30 for processing a request to access the user profile of the owner stored in the user profiler server 20. At step 505, the processor 301 of the owner user device 30 is operative or configured to receive a request via the user profile server 20 to access the user data in the user profile of the owner of the owner user device 30 stored in the user profiler server 20. At step 510, the processor 301 of the owner user device 30 is operative or configured to determine whether the request satisfies one of the owner specified rules (the first set of rules) stored in the memory 305. At step 515, if one of the first set of rules is satisfied, the processor 301 is operative or configured to generate a response indicating that the request is accepted. If none of the first set of rules is satisfied, the processor 301 at step 520 is operative or configured to provide a user interface on the display 307 allowing the second user to select one of specifying a new rule, modifying an existing rule, accepting the request, and denying the request. At step 525, the processor 301 is configured or operative to receive a user selection. If the user selection is to accept the request, the process proceeds to step 515 to generate a response indicating that the request is accepted. If the user selection is to deny the request, the process proceeds to step 535 to generate a response indicating that the request is denied. If the user selection is to specify a new rule or modify an existing rule, the processor 301 is operative or configured to allow the user to specify a new rule or modify an existing rule and the process proceeds to step 530, in which the processor 301 is operative or configured to determine if one of the new rules or one of the modified rules is satisfied. If no new rule and no modified rule are satisfied, the process proceeds to step 535, in which the processor 301 is operative or configured to generate a response indicating that the request is denied. If one of the new rules or one of the modified rules is satisfied, the process proceeds to step 515, in which the processor 301 is operative or configured to generate a response indicating that the request is accepted. After a response has been generated either at step 515 or step 535, the process proceeds to step 540, in which the processor 301 is operative or configured to send the response to the user profile server 20. The user profile server 20 then generates and sends a different response to a requesting device, such as requesting device 40, according to the response received from the owner user device 30.

The response from the owner user device 30 may indicate allowances of access to one or more items (a subset) but not all the items in the user profile specified to be accessed by the third party application 41 representing a third party in the request. The request may specify access attribute, such as one of read, write, or both, for each item to be accessed. The processor 301 is operative or configured to send the response to the user profile server 20 via the communications network 60.

In one embodiment, the user interface on the display 307 of the owner user device 30 allows the owner to specify new rules or modify the rules stored in the user profile server 20 and may request the user profile server 20 to respond to the request according to the updated rules.

As indicated above, in another embodiment, instead of specifying more rules or modifying existing rules, the owner may simply to accept or deny the request via the user interface on the display 307 and the processor 301 sends the response to the user profile server 20 accordingly.

As mentioned previously, the rules specified in the owner user device 30 may include rules same as those specified in the user profile stored in the user profiler server 20 but should include rules not specified in the set of rules stored in the user profile server 20.

In one embodiment, the profile application 31 in the owner user device 30 may request a copy of the list of third parties and request the user profile server 20 to revoke the API key or the access token and/or refresh token for a particular third party application from a particular request device representing a third party, as selected from the list by the owner through, for example, a user interface provided by the owner user device 30. The processor 301 is operative and configured to inform the user profile server 20 that the particular third party in the list is no longer allowed to access the user profile of the owner. The step of informing may comprise requesting the user profile server 20 to revoke the authorization indicator and the second indicator and/or the particular third party.

As described previously, the request may specify at least one data item in the user profile to be accessed and each of the set of rules indicates at least one data item in the user profile that is allowed to be accessed. The request may also include access attribute for each requested item. Similarly, a rule may specify an item with allowable attribute. A rule without listing the allowable items indicates that all items in the user profile are accessible with any access attribute if the rule is satisfied. If none of the specified at least one data item in the request is an allowed item according to any one of the rules, the response indicates that the request is denied; and If some of the specified at least one data item are allowed according to the first set of rules stored in the owner user device 30, the response indicates that the request is accepted and data items specified in the request are allowed and not allowed.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for informational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes that can be substantially represented in computer readable media and so executed by a computer or processor, whether or not such computer or processor is explicitly shown. The computer readable media and code written on can be implemented in a transitory state (signal) and a non-transitory state (e.g., on a tangible medium such as CD-ROM, DVD, Blu-Ray, Hard Drive, flash card, Secured Digital (SD) memory card, or other type of tangible storage medium).

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read only memory ("ROM") for storing software, random access memory ("RAM"), and nonvolatile storage.

Other hardware, conventional and/or custom, may also be included. Similarly, any switches/keys shown in the figures or mentioned above are conceptual only. Their function may be carried out through the operation of program logic, through dedicated logic, through the interaction of program control and dedicated logic, or even manually, the particular technique being selectable by the implementer as more specifically understood from the context.

Although embodiments which incorporate the teachings of the present disclosure have been shown and described in detail herein, those skilled in the art can readily devise many other varied embodiments that still incorporate these teachings. It is noted that modifications and variations can be made by persons skilled in the art in light of the above teachings.

## Claims

1. A method (400) performed by a server **characterized by**:
receiving (405) a first request from a first device to access a user profile of a second user;
generating (410) a first response according to rules specified by the second user; and
sending (415) the first response to the first device.

2. The method (400) of claim 1, wherein the first request includes a request to obtain an authorization indicator to access the user profile of the second user.

3. The method (400) of claim 2, wherein the step of generating the first response comprises:
checking if one of the rules is satisfied;
if one of the rules is satisfied, including in the first response the authorization indicator.

4. The method (400) of claim 3, wherein the user profile includes a plurality of data items, the first request indicates a first subset of data items in the user profile to be accessed, the rule satisfied indicates a second subset of data items in the user profile, and the first response includes a third set of data items which is accessible by the first device, wherein the third set includes data items appearing in both the first set and the second set.

5. The method (400) of claim 4, further comprising:
receiving a second request including a data item in the user profile of the second user to be accessed and a second indicator, which is the authorization indicator or derived from the authorization indicator;
checking if the one of the rules satisfied is satisfied with respect to the second request and the data item in the second request is one of the data items in the third set;
if the one of the rules satisfied is satisfied with respect to the second request and the data item in the second request is one of the data items in the third set, allowing access the data item specified in the second request; and
if the one of the rules satisfied is not satisfied with respect to the second request or the data item in the second request is not one of the data items in the third set, denying access to the data item specified in the second request.

6. The method (400) of claim 5, further comprising:
assigning a first expiration time for the authorization indicator; and
if the authorization indicator exceeds the first expiration time, sending a second response indicating that the second request is denied.

7. The method (400) of claim 2, wherein one of the rules specifies applications allowed to access the user profile of the second user, if the identifier in the first request identifies one of the allowable applications, the first response includes the authorization indicator, and if the identifier identifies an application, which is not one of the allowable applications, the first response indicates that the request is denied, or one of the rules specifies a particular day or time of day that an application can access a particular data item in the user profile or a particular context of the second user or a particular context of a second device associated with the second user in which a particular data item in the user profile is accessible.

8. A non-transitory program storage device (205) readable by machine, tangibly embodying a program of instructions executable by the machine to perform program steps of one of claims 1-7.

9. A server (20) comprising:
memory means (205) for storing a user profile of a second user; and
processing means (201), **characterized in that** the processing means (201) is configured to receive a first request from a first device (40) to access the user profile of the second user; generate a first response according to rules specified by the second user; and send the first response to the first device.

10. The server of claim 9, wherein the first request includes a request to obtain an authorization indicator to access the user profile of the second user.

11. The server of claim 10, wherein the processing means (201) is configured to generate the first response by checking if one of the rules is satisfied and if one of the rules is satisfied, including in the first response the authorization indicator.

12. The server of claim 11, wherein the user profile includes a plurality of data items, the first request indicates a first subset of data items in the user profile to be accessed, the rule satisfied indicates a second subset of data items in the user profile, and the first response includes a third set of data items which is accessible by the first device, wherein the third set includes data items appearing in both the first set and the second set.

13. The server of claim 12, wherein the processing means (201) is configured to receive a second request including a data item in the user profile of the second user to be accessed and a second indicator, which is the authorization indicator or derived from the authorization indicator; check if the one of the rules satisfied is satisfied with respect to the second request and the data item in the second request is one of the data items in the third set; if the one of the rules satisfied is satisfied with respect to the second request and the data item in the second request is one of the data items in the third set, allow access the data item specified in the second request; and if the one of the rules satisfied is not satisfied with respect to the second request or the data item in the second request is not one of the data items in the third set, deny access to the data item specified in the second request.

14. The server of claim 10, wherein one of the rules specifies applications allowed to access the user profile of the second user, if the identifier in the first request identifies one of the allowable applications, the first response includes the authorization indicator, and if the identifier identifies an application, which is not one of the allowable applications, the first response indicates that the request is denied.

15. The server of claim 10, wherein one of the rules specifies a particular day or time of day that an application can access a particular data item in the user profile or a particular context of the second user or a particular context of a second device associated with the second user in which a particular data item in the user profile is accessible.
